# EUROPEAN PATENT SPECIFICATION

(11) **EP 4 080 661 B1**
(45) Date of publication and mention of the grant of the patent: **25.12.2024**
(21) Application number: 20962301.6
(22) Date of filing: 24.12.2020
(51) Int. Cl.: H01M 50/342, H01M 10/0585, H01M 50/103, H01M 50/133, H01M 50/143, H01M 50/375

(54) **BATTERY CELL, BATTERY, AND POWER-CONSUMING DEVICE**
BATTERIEZELLE, BATTERIE UND ENERGIEVERBRAUCHENDE VORRICHTUNG
ÉLÉMENT DE BATTERIE, BATTERIE ET DISPOSITIF CONSOMMATEUR D'ÉNERGIE

(30) Priority: 20.11.2020 CN 202022719459 U
(43) Date of publication of application: 26.10.2022
(73) Proprietor: Contemporary Amperex Technology (Hong Kong) Limited, Central, Central And Western District (HK)
(72) Inventor: JIN, Haizu, Ningde, Fujian 352100 (CN); LIU, Jiang, Ningde, Fujian 352100 (CN); WANG, Xiaona, Ningde, Fujian 352100 (CN); CHEN, Wenwei, Ningde, Fujian 352100 (CN)
(74) Representative: Rowlands, Stuart Michael
(86) International application number: PCT/CN2020/139130
(87) International publication number: WO 2022/105010

(56) References cited:
- EP-A1- 1 258 931
- CN-A- 101 369 674
- CN-U- 208 706 688
- CN-U- 209 344 138
- CN-U- 209 344 138
- CN-U- 210 245 599
- CN-U- 210 245 599
- CN-U- 211 907 482
- CN-U- 211 907 482
- CN-U- 212 136 523
- JP-A- 2005 038 773
- US-A1- 2005 181 272

## Description

### TECHNICAL FIELD

This application relates to the technical field of batteries, and in particular, to a battery cell, a battery, and an electrical device.

### BACKGROUND

With the ongoing development of technology, users are posing higher requirements on a new energy battery. To improve safety performance of a battery cell, a pressure relief mechanism is usually disposed on the battery cell. In a case that gas is generated inside the battery cell due to abnormal operation of the battery cell, the gas can be exhausted by the pressure relief mechanism to avoid major safety accidents.

Currently, in order to increase an energy density of a battery, a relatively large number of battery cells are arranged in the battery. The plurality of battery cells are stacked. Consequently, a thickness of each battery cell is relatively small, and a lateral area of the battery cell is relatively small, so that the pressure relief mechanism disposed on a lateral side of the battery cell is undersized. As an additional consequence, the dimension of the battery cell in a length direction is excessively large, and a path for conveying the gas inside the battery cell to the pressure relief mechanism is excessively long. The gas is not expelled in time, resulting in an explosion.

Therefore, a new type of battery cell, battery, and electrical device are urgently needed.
US2005181272A1 relates generally to a lithium ion secondary battery comprising a safety vent. CN211907482U relates generally to a battery shell having explosion-proof notches. JP 2005 038773 A relates generally to a sealed battery having a cleavage groove to discharge gas. EP1258931A1 relates generally to a safety mechanism that is incorporated in a prismatic battery.

### SUMMARY

This application provides a battery cell, a battery, and an electrical device to improve safety performance of the battery cell.

Aspects of the invention are set out in the claims. An embodiment in a first aspect of this application provides a battery cell, including: a housing, where a dimension of the housing along a length direction is greater than a dimension of the housing along a thickness direction and a dimension of the housing along a width direction, and the housing includes a first board extending along the length direction and an accommodation space opened from at least one end; an electrode assembly, disposed in the accommodation space; and a cover, configured to cover the opening. A pressure relief mechanism is disposed on the first board. The pressure relief mechanism is configured to be actuated to relieve an internal pressure when the internal pressure or temperature of the housing reaches a threshold. In the length direction, an extension dimension of the pressure relief mechanism is greater than or equal to 1/4 of an extension dimension of the first board, wherein the first board comprises a first part and a second part that are arranged side by side, the first part is fixed to the second part by welding, a weld is formed at a joint between the first part and the second part, and the weld is the pressure relief mechanism.

In the battery cell according to this embodiment of this application, the battery cell includes the housing, the electrode assembly located inside the accommodation space of the housing, and the cover configured to cover the opening. The housing includes the first board extending in the length direction, and the extension dimension of the housing in the length direction is greater than the extension dimension of the housing in the thickness direction and the extension dimension in the width direction. Therefore, the extension length of the first board is relatively large. The pressure relief mechanism is disposed on the first board. The extension dimension of the pressure relief mechanism is greater than or equal to 1/4 of the extension dimension of the first board. Due to the relatively large length of the first board, the pressure relief mechanism can be disposed long enough to meet the pressure relief requirements of the battery cell. In addition, the dimension of the housing in the width direction and the thickness direction is relatively small. Therefore, a distance for conveying gas in the battery cell to the pressure relief mechanism is relatively short, thereby reducing hazards of explosion caused by inability to exhaust the gas inside the battery cell in time, and improving the safety performance of the battery cell.

According to an embodiment in the first aspect of this application, the pressure relief mechanism is located in a middle region of the first board. In this way, distances from different positions in the housing to the pressure relief mechanism tend to be identical, thereby avoiding a major safety accident caused by a high pressure at a partial position in the housing.

According to the first aspect of this application, the first board includes a first part and a second part that are arranged side by side. The first part is fixed to the second part by welding. A weld is formed at a joint between the first part and the second part. The weld is the pressure relief mechanism. The pressure relief mechanism is disposed in a simple way, and is formed conveniently, thereby improving efficiency of preparing the battery cell.

According to any one of the embodiments in the first aspect of this application, the weld runs through the first board along the length direction. In this way, the dimension of the pressure relief mechanism is large enough, thereby further improving the safety performance of the battery cell. In a case that the housing includes a side board and a bottom board, the side board may be formed by bending and welding a whole sheet of panel. During assembling and formation of the battery cell, the electrode assembly may be disposed on the side board, and then the side board is bent so that the side board encloses the electrode assembly, thereby reducing the difficulty of assembling the electrode assembly and improving the efficiency of forming the battery cell.

According to any one of the embodiments in the first aspect of this application, the pressure relief mechanism is a notch groove disposed on the first board. The notch groove can reduce structural strength of a position at which the notch groove is located. When the internal pressure or temperature of the housing 110 reaches a threshold, the notch groove is ruptured first before other positions of the first board. Therefore, the internal pressure of the housing can be relieved through a gap generated by the ruptured notch groove.

According to any one of the embodiments in the first aspect of this application, the notch groove is disposed on an outer surface that is of the first board and that faces back from the accommodation space. This prevents the electrode assembly from being scratched by edges and corners formed on the surface of the first board by the notch groove.

According to any one of the embodiments in the first aspect of this application, along a direction perpendicular to the first board, a corresponding dimension of the first board at the notch groove is 1/4 to 3/4 of a dimension of the first board in other regions. When the dimension of the notch groove falls within the foregoing range, it is avoided that, because the strength of the housing is insufficient due to an oversized notch groove, the first board is prone to be damaged at the notch groove. It is also avoided that, because the structural strength of the pressure relief mechanism is excessive due to an undersized notch groove, the pressure is unable to be released from the notch groove when the internal pressure or temperature of the housing reaches the threshold.

According to any one of the embodiments in the first aspect of this application, the housing further includes a second board extending along the length direction. The second board intersects the first board. The first board is perpendicular to the width direction. The second board is perpendicular to the thickness direction. An area of the first board is less than an area of the second board. The area of the first board is less than the area of the second board, and the pressure relief mechanism is disposed on the first board that is smaller in area. In a case that the battery cell is applied in a battery and a plurality of battery cells are arranged side by side in the battery, the plurality of battery cells can be stacked oppositely on the second board that is larger in area, thereby reducing the extension dimension of the plurality of battery cells in the thickness direction and simplifying the structure of the battery.

According to any one of the embodiments in the first aspect of this application, the electrode assembly includes a plurality of electrode plates stacked along the thickness direction. The electrode plates are stacked together with the second board along the thickness direction. With the electrode plates being stacked together with the second board along the thickness direction, a gap between two adjacent electrode plates can be disposed opposite to the first board. During the use of a battery cell, hot gas in the battery cell is usually generated between the two adjacent electrode plates. The gap between the two adjacent electrode plates is opposite to the first board. That is, the gap between the two adjacent electrode plates is disposed opposite to the pressure relief mechanism. In this way, the hot gas can be exhausted quickly through the pressure relief mechanism to avoid a major safety accident.

An embodiment in a second aspect of this application provides a battery, including the battery cell according to any one of the embodiments in the first aspect. A plurality of the battery cells are arranged side by side along the thickness direction. Both the length direction and the thickness direction are parallel to a horizontal direction, and the width direction is parallel to a vertical direction.

The battery cell described above is applied in the battery to improve the safety performance of the battery. The extension dimension of the battery cell in the thickness direction and the width direction is relatively small. In the battery according to this embodiment of this application, a plurality of battery cells are arranged side by side along the thickness direction, thereby reducing the extension dimension of the battery in the thickness direction. With the width direction being parallel to the vertical direction, the extension dimension of the battery in the vertical direction can also be reduced.

According to the embodiment in the first aspect of this application, the first board is located at a bottom of the battery cells along the vertical direction. During the use of the battery, for example, when the battery is used in a vehicle, compartments or other components of the vehicle are usually arranged on top of the battery. The bottom of the battery is usually the underbody and floor of the vehicle. The first board on which the pressure relief mechanism is disposed is located at a bottom of the battery cell. When the pressure relief mechanism relieves the internal pressure of the battery cell, the internal pressure can be released toward the bottom, thereby avoiding major injury or damage to passengers in the compartment or other parts of the vehicle and reducing the loss caused by the pressure relief mechanism releasing the internal pressure of the battery cell.

An embodiment in a third aspect of this application provides an electrical device, including the battery according to any one of the embodiments in the second aspect. The battery described above is applied in the electrical device to improve the safety performance of the electrical device.

### BRIEF DESCRIPTION OF DRAWINGS

To describe the technical solutions in the embodiments of this application more clearly, the following outlines the drawings used in the embodiments of this application. Evidently, the drawings outlined below are merely a part of embodiments of this application. A person of ordinary skill in the art may derive other drawings from the outlined drawings without making any creative efforts.
FIG. 1 is a schematic structural diagram of a vehicle according to an embodiment of this application;
FIG. 2 is a schematic structural exploded view of a battery according to an embodiment of this application;
FIG. 3 is a schematic structural diagram of a battery cell according to an embodiment of this application;
FIG. 4 is a schematic structural exploded view of the embodiment shown in FIG. 3 as observed from a viewing angle;
FIG. 5 is a schematic structural exploded view of the embodiment shown in FIG. 3 as observed from another viewing angle;
FIG. 6 is a side view of a battery cell according to an embodiment of this application;
FIG. 7 is a sectional view along an A-A section line of the drawing shown FIG. 6 according to an embodiment;
FIG. 8 is a partially enlarged schematic structural diagram of position I in FIG. 7;
FIG. 9 is a sectional view along an A-A section line of the drawing in FIG. 6 according to another embodiment; and
FIG. 10 is a partially enlarged schematic structural diagram of position II in FIG. 9.

The drawings are not drawn to scale.

### Reference numerals:

1. Vehicle; 1a. Motor; 1b. Controller;
10. Battery;
100. Battery cell;
110. Housing; 111. First board; 111a. First part; 111b. Second part; 112. Accommodation space; 113. Second board; 114. Bottom board;
120. Electrode assembly; 121. Electrode plate;
130. Cover;
140. Pressure relief mechanism; 140a. Weld; 140b. Notch groove;
200. Shell;
210. Bottom frame;
220. Upper cover;
230. Partitioning bracket

### DETAILED DESCRIPTION OF EMBODIMENTS

To make the objectives, technical solutions, and advantages of the embodiments of this application clearer, the following gives a clear description of the technical solutions in the embodiments of this application with reference to the drawings in the embodiments of this application. Evidently, the described embodiments are merely a part of but not all of the embodiments of this application. All other embodiments derived by a person of ordinary skill in the art based on the embodiments of this application without making any creative efforts fall within the protection scope of this application.

Unless otherwise defined, all technical and scientific terms used herein have the same meanings as usually understood by a person skilled in the technical field of this application. The terms used in the specification of this application are merely intended for describing specific embodiments but are not intended to limit this application. The terms "include" and "contain" and any variations thereof used in the specification, claims, and brief description of drawings of this application are intended as non-exclusive inclusion. The terms such as "first" and "second" used in the specification, claims, and brief description of drawings of this application are intended to distinguish different objects, but are not intended to describe a specific sequence or order of priority.

Reference to "embodiment" in this application means that a specific feature, structure or characteristic described with reference to the embodiment may be included in at least one embodiment of this application. Reference to this term in different places in the specification does not necessarily represent the same embodiment, nor does it represent an independent or alternative embodiment in a mutually exclusive relationship with other embodiments. A person skilled in the art explicitly and implicitly understands that the embodiments described in this application may be combined with other embodiments.

In the description of this application, unless otherwise expressly specified and defined, the terms "mount", "concatenate", "connect", and "attach" are understood in a broad sense. For example, a "connection" may be a fixed connection, a detachable connection, or an integrated connection; or may be a direct connection or an indirect connection implemented through an intermediary; or may be internal communication between two components. A person of ordinary skill in the art understands the specific meanings of the terms in this application according to the context.

The term "and/or" in this application indicates merely a relation for describing the related objects, and represents three possible relationships. For example, "A and/or B" may represent the following three circumstances: A alone, both A and B, and B alone. In addition, the character "/" herein generally indicates an "or" relationship between the object preceding the character and the object following the character.

"A plurality of" referred to in this application means two or more (including two). Similarly, "a plurality of groups" means two or more groups (including two groups), and "a plurality of pieces" means two or more pieces (including two pieces).

In this application, a battery cell may include a lithium-ion secondary battery, a lithium-ion primary battery, a lithium-sulfur battery, a sodium-lithium-ion battery, a sodium-ion battery, a magnesium-ion battery, or the like. The embodiments of this application do not limit the type of the battery cell. The battery cell may be in a cylindrical shape, a flat shape, a cuboidal shape, or other shapes. The embodiments of this application do not limit the shape of the battery cell. Depending on the form of packaging, the battery cell is typically classed into three types: cylindrical battery cell, prismatic battery cell, and pouch-type battery cell. The embodiments of this application do not limit the form of the battery cell.

The battery mentioned in the embodiments of this application means a stand-alone physical module that includes one or more battery cells to provide a higher voltage and a higher capacity. For example, the battery mentioned in this application may include a battery module, a battery pack, or the like. A battery typically includes a box configured to package one or more battery cells. The box can prevent liquid or other foreign matters from affecting the charging or discharge of the battery cells.

A battery cell includes an electrode assembly and an electrolytic solution. The electrode assembly includes a positive electrode plate, a negative electrode plate, and a separator. The battery cell works primarily by relying on movement of metal ions between the positive electrode plate and the negative electrode plate. The positive electrode plate includes a positive current collector and a positive active material layer. The positive active material layer is coated on a surface of the positive current collector. A part that is of the current collector and that is not coated with the positive active material layer protrudes from a part that is of the current collector and that is coated with the positive active material layer. The part that is of the current collector and that is not coated with the positive active material layer serves as a positive tab. Using a lithium-ion battery as an example, the positive current collector may be made of aluminum, and a positive active material may be lithium cobalt oxide, lithium iron phosphate, ternary lithium, lithium manganese oxide, or the like. The negative electrode plate includes a negative current collector and a negative active material layer. The negative active material layer is coated on a surface of the negative current collector. A part that is of the current collector and that is not coated with the negative active material layer protrudes from a part that is of the current collector and that is coated with the negative active material layer. The part that is of the current collector and that is not coated with the negative active material layer serves as a negative tab. The negative current collector may be made of copper, and a negative active material may be carbon, silicon, or the like. In order to ensure passage of a large current without fusing off, the positive tab is plural in number, and the plurality of positive tabs are stacked together; the negative tab is plural in number, and the plurality of negative tabs are stacked together. The separator may be made of polypropylene (PP), polyethylene (PE), or another material. In addition, the electrode assembly may be a jelly-roll structure or a stacked structure, without being limited herein.

The development of the battery technology needs to allow for a plurality of design factors, including performance parameters such as energy density, cycle life, discharge capacity, charge rate, and discharge rate, and also needs to consider the safety of the battery.

For a battery cell, main safety hazards come from a charging process and a discharging process. In addition, appropriate ambient temperature design is required. To effectively avoid unnecessary losses, the battery cell is generally protected by at least three protective measures. Specifically, the protective measures include at least a switch element, selecting an appropriate separator material, and a pressure relief mechanism. The switch element is an element that, when a temperature or resistance in the battery cell reaches a given threshold, causes the battery to stop charging or discharging. The separator is configured to separate the positive electrode plate from the negative electrode plate, and, when the temperature rises to a given value, automatically melt micron-scale (or even nanometer-scale) micropores attached to the separator, so as to prevent metal ions from passing through the separator and terminate internal reactions of the battery cell.

The pressure relief mechanism means an element or component that is actuated to relieve an internal pressure or temperature when the internal pressure or temperature of a battery cell reaches a preset threshold. The threshold may vary depending on design requirements. The threshold may depend on the material of one or more of the positive electrode plate, the negative electrode plate, the electrolytic solution, or the separator in the battery cell. The pressure relief mechanism may be in the form of an explosion-proof valve, a gas valve, a pressure relief valve, a safety valve, or the like, and may specifically adopt a pressure-sensitive or temperature-sensitive element or structure. To be specific, when the internal pressure or temperature of the battery cell reaches a preset threshold, the pressure relief mechanism performs an action or a fragile structure disposed in the pressure relief mechanism is ruptured to form an opening or channel for relieving the internal pressure or temperature.

The term "actuate" mentioned in this application means that the pressure relief mechanism performs an action or is activated to a given state so that the internal pressure and temperature of the battery cell is relieved. The actions performed by the pressure relief mechanism may include, but are not limited to rupturing, shattering, tearing, or opening at least a part of the pressure relief mechanism, or the like. When the pressure relief mechanism is actuated, high-temperature and high-pressure substances inside the battery cell are expelled as emissions out of the actuated position. In this way, the pressure and temperature of the battery cell are relieved under a controllable circumstance to avoid potential severer accidents.

The emissions out of the battery cell mentioned in this application include but are not limited to: electrolytic solution, melted or split positive and negative electrode plates, fragments of the separator, high-temperature and high-pressure gases generated during reactions, flames, and the like.

The pressure relief mechanism on the battery cell exerts an important effect on the safety of the battery. For example, in a case of short circuit, overcharge, or the like, thermal runaway may occur inside the battery cell, resulting in a sudden rise in pressure or temperature. In this case, the internal pressure and heat may be released outward through the actuation of the pressure relief mechanism to prevent explosion and fire of the battery cell.

Currently, in order to increase the energy density of the battery, a relatively large number of battery cells are arranged in the battery. The dimension of a battery cell is relatively small in the thickness direction, and the dimension of the battery cell is relatively large in the length direction. Consequently, on the one hand, a lateral area of the battery cell is relatively small, so that the pressure relief mechanism disposed on a lateral side of the battery cell is undersized. On the other hand, a path for conveying the gas inside the battery to the pressure relief mechanism in the length direction is relatively long. Due to the two factors, the gas is unable to be exhausted in time by the pressure relief mechanism, and explosion may occur, thereby severely deteriorating the safety performance of the battery cell.

To solve the foregoing technical problems, this application is put forward. In a solution disclosed in this application, by increasing the length of the pressure relief mechanism, a distance for conveying the gas generated in different positions inside the battery cell to the pressure relief mechanism is shortened, thereby reducing hazards of explosion caused by inability to exhaust the gas inside the battery cell in time, and improving the safety performance of the battery cell.

All technical solutions described in the embodiments of this application are applicable to various battery-powered devices such as a mobile phone, a portable device, a laptop computer, an electric power cart, an electrical toy, a power tool, an electric vehicle, a ship, and a spacecraft. The spacecraft includes, for example, an airplane, a rocket, a space shuttle, and a spaceship.

Understandably, the technical solutions described in the embodiments of this application are not only applicable to the devices described above, but also applicable to all battery-powered devices. However, for brevity, the following embodiments are described by using an electric vehicle as an example.

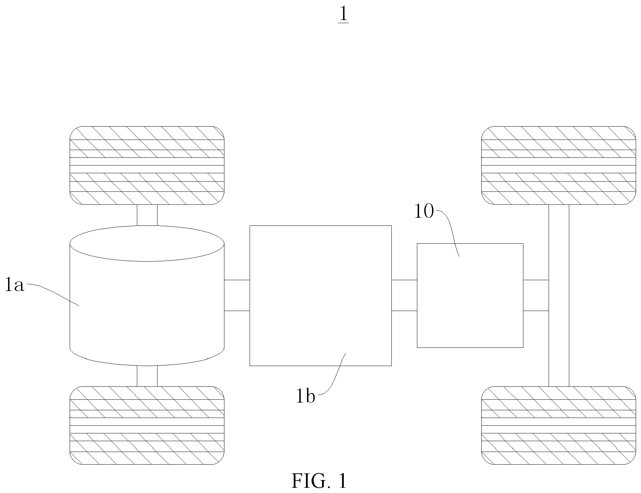

For a better understanding of this application, the following describes a battery cell, a battery, and an electrical device according to embodiments of this application in detail with reference to FIG. 1 to FIG. 10.

FIG. 1 is a schematic structural diagram of a vehicle according to an embodiment of this application.

A vehicle 1 according to an embodiment in a first aspect of this application may be an oil-fueled vehicle, a natural gas vehicle, or a new energy vehicle. The new energy vehicle may be a battery electric vehicle, a hybrid electric vehicle, a range-extended electric vehicle, or the like. A motor 1a, a controller 1b, and a battery 10 may be disposed inside the vehicle 1. The controller 1b is configured to control the battery 10 to supply power to the motor 1a. For example, the battery 10 may be disposed at the bottom, front, or rear of the vehicle 1. The battery 10 may be configured to supply power to the vehicle 1. For example, the battery 10 may serve as an operating power supply of the vehicle 1 to power a circuit system of the vehicle 1. For example, the battery may be configured to meet operating power usage requirements of the vehicle 1 that is being started, navigated, or running. In another embodiment of this application, the battery 10 serves not only as an operating power supply of the vehicle 1, but may also serve as a drive power supply of the vehicle 1 to provide driving motive power for the vehicle 1 in place of or partially in place of oil or natural gas.

To meet different power usage requirements, the battery 10 may include a plurality of battery cells 100. The plurality of battery cells 100 may be connected in series, in parallel, or in both series and parallel. The connecting in both series and parallel means a combination of series connection and parallel connection. The battery 10 may also be referred to as a battery pack. Optionally, the plurality of battery cells 100 may be connected in series, in parallel, or in both series and in parallel to form a battery module, and then a plurality of battery modules may be connected in series, in parallel, or in both series and parallel to form the battery 10. In other words, the plurality of battery cells 100 may directly form the battery 10, or form the battery modules that are then used to form the battery 10.

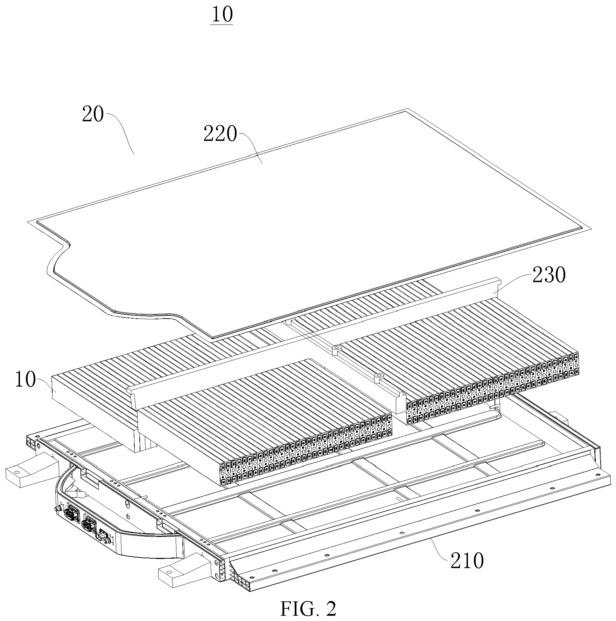

Referring to FIG. 2, FIG. 2 is a schematic structural diagram of a battery 10 according to an embodiment in a second aspect of this application.

With respect to the battery 10 according to this embodiment of this application, the battery 10 includes a plurality of battery cell 100. The plurality of battery cells 100 are arranged side by side along a thickness direction of the battery cells. Both the thickness direction and a length direction are parallel to a horizontal direction, and a width direction is parallel to a vertical direction.

An extension dimension of a battery cell 100 in the thickness direction and the width direction is relatively small. In the battery 10 according to this embodiment of this application, the plurality of battery cells 100 are arranged side by side along the thickness direction, thereby reducing the extension dimension of the battery 10 in the thickness direction. With the width direction being parallel to the vertical direction, the extension dimension of the battery 10 in the vertical direction can also be reduced. Further, the thickness direction is parallel to the horizontal direction, the horizontal direction is a reference direction, and the vertical direction and the horizontal direction are perpendicular to each other.

In some optional embodiments, the battery cell 100 includes a first board 111. A pressure relief mechanism is disposed on the first board 111. The first board 111 on which the pressure relief mechanism 140 is disposed is located at a bottom of the battery cell 100 along the vertical direction.

During the use of the battery 10, for example, when the battery 10 is used in a vehicle, compartments or other components of the vehicle are usually arranged on top of the battery 10. The bottom of the battery 10 is usually the underbody and floor of the vehicle. The first board 111 on which the pressure relief mechanism 140 is disposed is located at the bottom of the battery cell 100. When the pressure relief mechanism 140 relieves the internal pressure of the battery cell 100, the internal pressure can be released toward the bottom, thereby avoiding major injury or damage to passengers in the compartment or other parts of the vehicle and reducing the loss caused by the pressure relief mechanism releasing the internal pressure of the battery cell 100.

Optionally, the battery 10 includes a bottom frame 210 and an upper cover 220. The bottom frame 210 and the upper cover 220 close in to form a hollow cavity configured to accommodate the battery cell 100.

Depending on different power requirements, the number of battery cells 100 may be set to any value. A plurality of battery cells 100 may be connected in series, in parallel, or in both series and parallel to achieve a relatively high capacity or power. Each battery 10 may include a relatively large number of battery cells 100. Therefore, in order to facilitate mounting, the battery cells 100 may be arranged in groups. Each group of battery cells 100 forms a battery module. The number of battery cells 100 included in the battery module is not limited, and may be set as required.

As shown in FIG. 2, a plurality of battery cells 100 are stacked along the thickness direction to form a battery module. The number of battery modules in the battery 10 is 4. The number of battery modules may be one or more instead. When the number of battery modules in the battery 10 is plural, the plurality of battery modules are arranged side by side in the bottom frame 210 along the thickness direction and/or the length direction. Optionally, a partitioning bracket 230 is further disposed between two adjacent battery modules.

Optionally, the battery 10 may further include other structures, details of which are omitted here. For example, the battery 10 may further include a busbar component. The busbar component is configured to implement electrical connection between the plurality of battery cells 100, such as parallel connection, series connection, or series-parallel connection. Specifically, the busbar component may implement the electrical connection between the battery cells 100 by connecting electrode terminals of the battery cells 100. Further, the busbar component may be fixed to the electrode terminals of the battery cells 100 by welding. Electrical energy of the plurality of battery cells 100 may be further led out by a conductive mechanism running through the box. Optionally, the conductive mechanism may also belong to the busbar component.

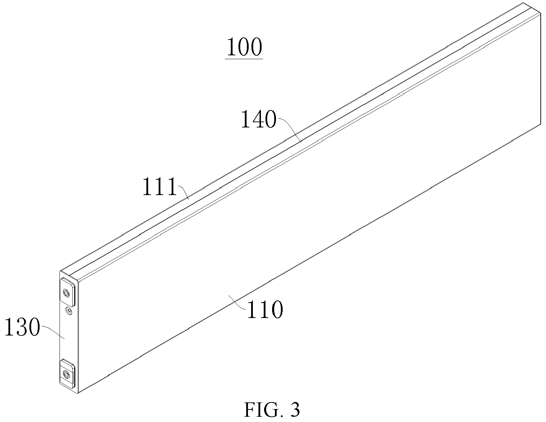

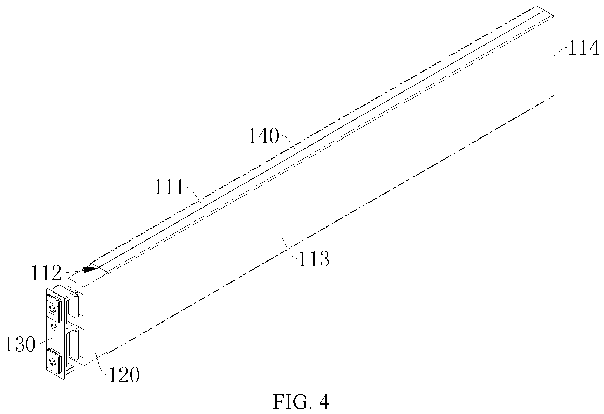

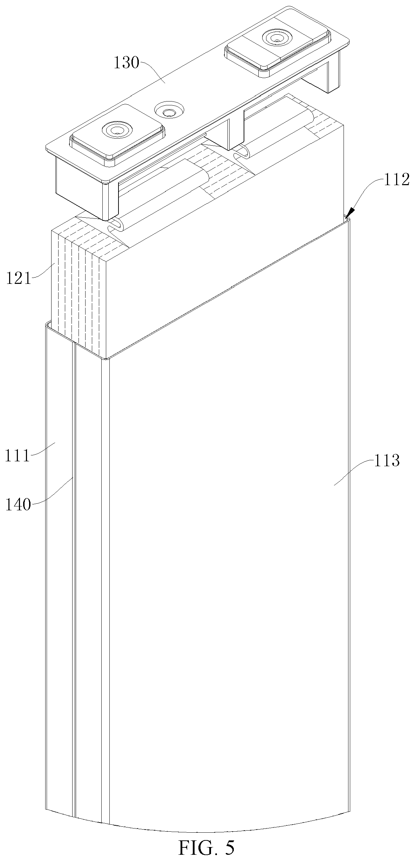

Referring to FIG. 3 to FIG. 5, FIG. 3 is a schematic structural diagram of a battery cell 100 according to an embodiment in a third aspect of this application. FIG. 4 is a schematic structural exploded view of FIG. 3 observed from a viewing angle. FIG. 5 is a partial schematic structural exploded view of FIG. 3 observed from another viewing angle.

An embodiment of this application provides a battery cell 100. The battery cell 100 includes: a housing 110, where a dimension of the housing 110 along a length direction is greater than a dimension of the housing 110 along a thickness direction and a dimension of the housing along a width direction, and the housing 110 includes a first board 111 extending along the length direction and an accommodation space 112 opened from at least one end; an electrode assembly 120, disposed in the accommodation space 112; and a cover 130, configured to cover the opening. A pressure relief mechanism 140 is disposed on the first board 111. The pressure relief mechanism 140 is configured to be actuated to relieve an internal pressure when the internal pressure or temperature of the housing 110 reaches a threshold. In the length direction, an extension dimension of the pressure relief mechanism 140 is 1/4 of an extension dimension of the first board 111.

In some embodiments, the cover 130 may be fixed to the opening of the housing 110. For example, the cover 130 may be welded to the opening of the housing 110.

Optionally, the accommodation space 112 may be opened from one end, and the cover 130 is configured to cover the opening. In other embodiments, the accommodation space 112 may be opened from both ends. That is, the accommodation space 112 includes two openings. The cover 130 may be two in number, and each cover 130 is configured to cover a corresponding opening.

In the battery cell 100 according to this embodiment of this application, the battery cell 100 includes the housing 110, the electrode assembly 120 located inside the accommodation space 112 of the housing 110, and the cover 130 configured to cover the opening. The housing 110 includes the first board 111 extending in the length direction. The dimension of the housing 110 along the length direction is greater than the dimension of the housing 110 along the thickness direction and the dimension along the width direction. Therefore, the length of the first board 111 is relatively large. The pressure relief mechanism 140 is disposed on the first board 111. The extension dimension of the pressure relief mechanism 140 is greater than or equal to ¼ of the extension dimension of the first board 111. Due to the relatively large length of the first board 111, the pressure relief mechanism 140 can be disposed long enough to meet the pressure relief requirements of the battery cell. In addition, the dimension of the housing 110 in the width direction and the thickness direction is relatively small. Therefore, a distance for conveying gas in the battery cell 100 to the pressure relief mechanism 140 is relatively short, thereby reducing hazards of explosion caused by inability to exhaust the gas inside the battery cell 100 in time, and improving the safety performance of the battery cell 100.

The pressure relief mechanism 140 may be disposed in various ways. For example, the pressure relief mechanism 140 may be a temperature-sensitive pressure relief mechanism. The temperature-sensitive pressure relief mechanism is configured to melt when the internal temperature of the battery cell 100 equipped with the pressure relief mechanism 140 reaches a threshold; and/or, the pressure relief mechanism 140 may be a pressure-sensitive pressure relief mechanism. The pressure-sensitive pressure relief mechanism is configured to rupture when the internal air pressure of the battery cell 100 equipped with the pressure relief mechanism 140 reaches a threshold.

Alternatively, the pressure relief mechanism 140 may be a thin-walled structure. The structural strength of the position at which the pressure relief mechanism 140 is located is less than the structural strength of other positions of the first board 111. In this way, when the internal air pressure of the battery cell 100 reaches the threshold, the pressure relief mechanism 140 is ruptured before other positions of the first board 111. Therefore, the gas can be exhausted from the pressure relief mechanism 140.

The shape of the pressure relief mechanism 140 is diversified. The pressure relief mechanism 140 may be in any appropriate shape as long as the extension dimension of the pressure relief mechanism 140 is greater than or equal to 1/4 of the extension dimension of the first board 111 in the length direction.

In other embodiments, the pressure relief mechanism 140 is strip-shaped. Even if the width of the first board 111 is relatively small, the pressure relief mechanism 140 can still be accommodated. The pressure relief mechanism 140 may be disposed on a board that is relatively small in area on the housing 110, so that the housing 110 can be in various shapes.

For example, when a plurality of battery cells 100 are stacked and the width of the board on the housing 110 is relatively small due to a relatively small thickness of the battery cells 100, the pressure relief mechanism 140 can still be disposed on the housing 110.

For example, in some embodiments, the housing 110 further includes a second board 113 extending along the length direction. The second board 113 intersects the first board 111. The first board 111 is perpendicular to the width direction. The second board 113 is perpendicular to the thickness direction. The area of the first board 111 is less than the area of the second board 113.

In such optional embodiments, the area of the first board 111 is less than the area of the second board 113, and the pressure relief mechanism 140 is disposed on the first board 111 that is smaller in area. In a case that the battery cell 100 is applied in a battery 10 and a plurality of battery cells 100 are arranged side by side in the battery 10, the plurality of battery cells 100 can be stacked oppositely on the second board 113 that is larger in area, thereby reducing the extension dimension of the plurality of battery cells 100 in the thickness direction and simplifying the structure of the battery 10.

Optionally, the housing 110 includes two second boards 113 disposed opposite to each other along the thickness direction, and two first boards 111 disposed opposite to each other along the width direction. The two first boards 111 and the two second boards 113 are alternately connected to each other in tandem, and close in to form the accommodation space 112.

The electrode assembly 120 may be disposed in various ways. For example, the electrode assembly 120 is formed by winding an electrode plate 121.

In some other embodiments, still referring to FIG. 5, the electrode assembly 120 includes a plurality of electrode plates 121 stacked along the thickness direction. The electrode plates 121 are stacked together with the second board 113 along the thickness direction. In FIG. 5, positions of the electrode plates 121 are shown by dashed lines. The dashed lines do not constitute a structural limitation on the embodiments of this application.

In such optional embodiments, the electrode plates 121 are stacked together with the second board 113 along the thickness direction, so that a gap between two adjacent electrode plates 121 can be disposed opposite to the first board 111. During the use of a battery cell 100, hot gas in the battery cell 100 is usually generated between the two adjacent electrode plates 121. The gap between the two adjacent electrode plates 121 is opposite to the first board 111. That is, the gap between the two adjacent electrode plates 121 is disposed opposite to the pressure relief mechanism 140. In this way, the hot gas can be exhausted quickly through the pressure relief mechanism 140 to avoid a major safety accident.

The length of the pressure relief mechanism 140 may be set in various ways. Optionally, in the length direction, the extension dimension of the pressure relief mechanism 140 is equal to the extension dimension of the first board 111. When the internal pressure or temperature of the battery cell 100 reaches a threshold, the internal pressure can be relieved more quickly, thereby further improving the safety performance of the battery cell 100 and avoiding major safety accidents.

Optionally, the pressure relief mechanism 140 is located in a middle region of the first board 111. For example, when the first board 111 possesses a preset width extending in the thickness direction, the pressure relief mechanism 140 is located in the middle region of the first board 111 in the thickness direction; and/or, when the extension dimension of the pressure relief mechanism 140 in the length direction is less than the extension dimension of the first board 111 in the length direction, the pressure relief mechanism 140 is located in the middle region of the first board 111 in the length direction. In this way, distances from different positions in the housing 110 to the pressure relief mechanism 140 tend to be identical, thereby avoiding a major safety accident caused by a high pressure at a partial position in the housing 110.

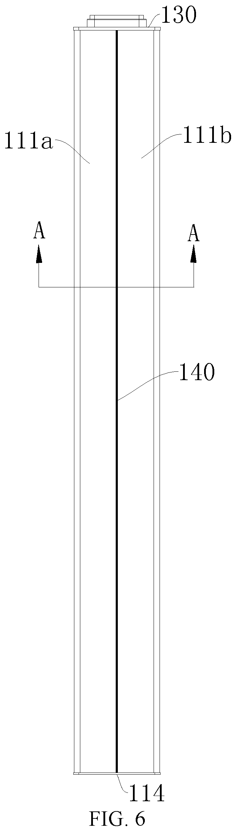

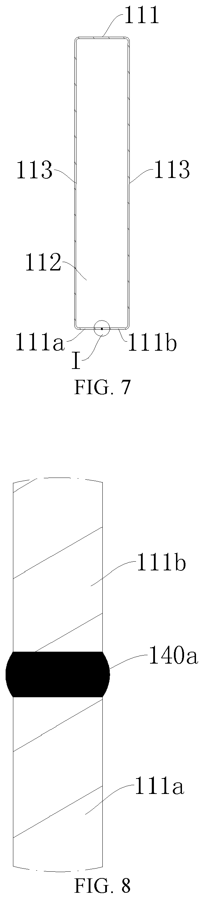

Referring to FIG. 6 to FIG. 8, FIG. 6 is a side view of a battery cell 100 according to an embodiment of this application. FIG. 7 is a sectional view of the drawing in FIG. 6 along an A-A section line. FIG. 8 is a partial enlarged view of position I in FIG. 7.

The first board 111 includes a first part 111a and a second part 111b that are arranged side by side. The first part 111a is fixed to the second part 111b by welding. A weld 140a is formed at a joint between the first part 111a and the second part 111b. The weld 140a is the pressure relief mechanism 140.

The pressure relief mechanism 140 is the weld 140a formed during welding between the first part 111a and the second part 111b. The pressure relief mechanism 140 is disposed in a simple way, and is formed conveniently, thereby improving efficiency of preparing the battery cell 100. The weld 140a is formed by welding the first part 111a and the second part 111b with solder, for example.

Optionally, the weld 140a runs through the first board 111 along the length direction. That is, a joint gap that runs through the first board along the length direction exists between the first part 111a and the second part 111b. In this way, the dimension of the pressure relief mechanism 140 is large enough, thereby further improving the safety performance of the battery cell 100. In a case that the first board 111 extends along the thickness direction, the first board 111 includes a first part 111a and a second part 111b that are arranged side by side along the thickness direction. The first part 111a is welded to the second part 111b to form the weld 140a.

Optionally, the extension dimension of the weld 140a in the width direction is 1 mm to 3 mm. When the extension dimension of the weld 140a in the width direction falls within the foregoing range, on the one hand, an oversized weld 140a is avoided. The oversized weld results in insufficient structural strength of the position at which the weld 140a is located, makes the battery cell 100 prone to be damaged, and leads to leakage of the electrolytic solution in the housing. On the other hand, an undersized weld 140a is avoided. The undersized weld results in excessive structural strength of the position at which the weld 140a is located. Consequently, the weld 140a is unable to be ruptured to relieve the internal pressure when the internal pressure or temperature in the battery cell 100 reaches the threshold.

The housing 110 includes, for example, a side board and a bottom board 114. The bottom board 114 is disposed opposite to an opening. The side board closes in to form the opening. The side board includes the first board 111. When the first part 111a is fully separated from the second part 1 11b, the side board may be formed by bending a whole sheet of panel.

When the extension length of the battery cell 100 in the length direction is relatively large, the operation of disposing the electrode assembly 120 into the accommodation space 112 from the opening is relatively difficult. In a case that the side board is formed by bending a whole sheet of panel, the electrode assembly 120 may be disposed on the side board first, and then the side board is bent so that the side board encloses the electrode assembly 120. This can reduce the difficulty of operation and improve the efficiency of forming the battery cell 100.

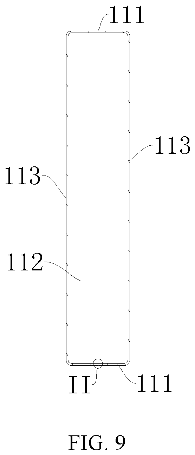

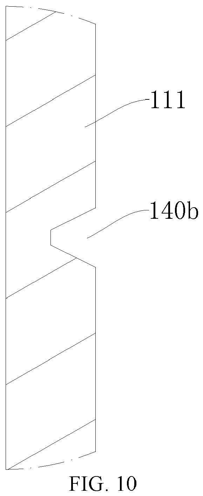

Referring to FIG. 9 to FIG. 10, FIG. 9 is a sectional view along an A-A section line in FIG. 6 according to another embodiment of this application. FIG. 10 is a partially enlarged schematic structural diagram of position II in FIG. 9.

In some other embodiments, the pressure relief mechanism 140 is a notch groove 140b disposed on the first board 111. The notch groove 140b can reduce structural strength of a position at which the notch groove is located. When the internal pressure or temperature of the housing 110 reaches a threshold, the notch groove 140b is ruptured first before other positions of the first board 111. Therefore, the internal pressure of the housing 110 can be relieved through a gap generated by the ruptured notch groove 140b.

Optionally, the notch groove 140b is disposed on an outer surface that is of the first board 111 and that faces back from the accommodation space 112. This prevents the electrode assembly 120 from being scratched by edges and corners formed on the surface of the first board 111 by the notch groove 140b.

The dimension of the notch groove 140b is not limited. Optionally, along a direction perpendicular to the first board 111, a corresponding dimension of the first board 111 at the notch groove 140b is 1/4 to 3/4 of a dimension of the first board 111 in other regions. When the dimension of the notch groove 140b falls within the foregoing range, it is avoided that, because the strength of the housing 110 is insufficient due to an oversized notch groove 140b, the first board 111 is prone to be damaged at the notch groove 140b. It is also avoided that, because the structural strength of the pressure relief mechanism 140 is excessive due to an undersized notch groove 140b, the pressure is unable to be released from the notch groove 140b when the internal pressure or temperature of the housing 110 reaches the threshold.

Optionally, an opening width of the notch groove 140b is 1 mm to 3 mm. When the width of the notch groove 140b falls within the foregoing range, it is avoided that, because the structural strength of the position at which the notch groove 140b is located is insufficient due to an oversized notch groove 140b, the housing is prone to be damaged, resulting in leakage of the electrolytic solution in the housing. It is also avoided that, because the structural strength of the position at which the notch groove 140b is located is excessive due to an undersized notch groove 140b, the notch groove 140b is unable to be ruptured to release the internal pressure when the internal pressure or temperature of the housing 110 reaches the threshold.

Optionally, a cross section of an inner surface of the notch groove 140b is V-shaped or arc-shaped to facilitate the formation of the notch groove 140b.

## Claims

1. A battery cell (100), comprising:
a housing (110), wherein a dimension of the housing (110) along a length direction is greater than a dimension of the housing (110) along a thickness direction and a dimension of the housing (110) along a width direction, and the housing (110) comprises a first board (111) extending along the length direction and an accommodation space (112) opened from at least one end;
an electrode assembly (120), disposed in the accommodation space (112);
a cover (130), configured to cover the opening,
wherein, a pressure relief mechanism (140) is disposed on the first board (111), the pressure relief mechanism (140) is configured to be actuated to relieve an internal pressure when the internal pressure or temperature of the housing (110) reaches a threshold, and, in the length direction, an extension dimension of the pressure relief mechanism (140) is greater than or equal to 1/4 of an extension dimension of the first board (111); and
**characterized in that** the first board (111) comprises a first part (111a) and a second part (111b) that are arranged side by side, the first part (111a) is fixed to the second part (111b) by welding, a weld (140a) is formed at a joint between the first part (111a) and the second part (111b), and the weld (140a) is the pressure relief mechanism (140).

2. The battery cell (100) according to claim 1, wherein the pressure relief mechanism (140) is located in a middle region of the first board (111).

3. The battery cell (100) according to claim 1, wherein the weld (140a) runs through the first board (111) along the length direction.

4. The battery cell (100) according to claim 1, wherein the pressure relief mechanism (140) is a notch groove (140b) disposed on the first board (111).

5. The battery cell (100) according to claim 4, wherein the notch groove (140b) is disposed on an outer surface that is of the first board (111) and that faces back from the accommodation space (112).

6. The battery cell (100) according to claim 4, wherein, along a direction perpendicular to the first board (111), a corresponding dimension of the first board (111) at the notch groove (140b) is 1/4 to 3/4 of a dimension of the first board (111) in other regions.

7. The battery cell (100) according to any one of claims 1 to 6, wherein the housing (110) further comprises a second board (113) extending along the length direction, the second board (113) intersects the first board (111), the first board (111) is perpendicular to the width direction, the second board (113) is perpendicular to the thickness direction, and an area of the first board (111) is less than an area of the second board (113).

8. The battery cell (100) according to claim 7, wherein the electrode assembly (120) comprises a plurality of electrode plates (121) stacked along the thickness direction, and the electrode plates (121) are stacked together with the second board (113) along the thickness direction.

9. A battery (10), comprising:
the battery cell (100) according to any one of claims 1 to 8, wherein a plurality of the battery cells (100) are arranged side by side along the thickness direction, both the length direction and the thickness direction are parallel to a horizontal direction, and the width direction is parallel to a vertical direction.

10. The battery (10) according to claim 9, wherein the first board (111) is located at a bottom of the battery cells (100) along the vertical direction.

11. An electrical device, comprising the battery (10) according to claim 9 or 10.

## Patentansprüche

1. Batteriezelle (100), umfassend:
ein Gehäuse (110), wobei eine Abmessung des Gehäuses (110) entlang einer Längenrichtung größer als eine Abmessung des Gehäuses (110) entlang einer Dickenrichtung und eine Abmessung des Gehäuses (110) entlang einer Breitenrichtung ist und das Gehäuse (110) eine sich entlang der Längenrichtung erstreckende erste Wand (111) und einen von mindestens einem Ende aus offenen Aufnahmeraum (112) umfasst;
eine Elektrodenanordnung (120), die in dem Aufnahmeraum (112) angeordnet ist;
eine Abdeckung (130), die dazu konfiguriert ist, die Öffnung abzudecken,
wobei ein Druckentlastungsmechanismus (140) an der ersten Wand (111) angeordnet ist, der Druckentlastungsmechanismus (140) dazu konfiguriert ist, ausgelöst zu werden, um einen Innendruck zu entlasten, wenn der Innendruck oder die Innentemperatur des Gehäuses (110) einen Schwellenwert erreicht, und wobei in der Längenrichtung eine Erstreckungsabmessung des Druckentlastungsmechanismus (140) größer oder gleich 1/4 einer Erstreckungsabmessung der ersten Wand (111) ist; und
**dadurch gekennzeichnet, dass** die erste Wand (111) einen ersten Teil (111a) und einen zweiten Teil (111b) umfasst, die Seite an Seite angeordnet sind, wobei der erste Teil (111a) durch Schweißen an dem zweiten Teil (111b) befestigt ist, eine Schweißnaht (140a) an einer Verbindungsstelle zwischen dem ersten Teil (111a) und dem zweiten Teil (111b) gebildet ist und es sich bei der Schweißnaht (140a) um den Druckentlastungsmechanismus (140) handelt.

2. Batteriezelle (100) nach Anspruch 1, wobei sich der Druckentlastungsmechanismus (140) in einem mittleren Bereich der ersten Wand (111) befindet.

3. Batteriezelle (100) nach Anspruch 1, wobei die Schweißnaht (140a) entlang der Längenrichtung durch die erste Wand (111) verläuft.

4. Batteriezelle (100) nach Anspruch 1, wobei es sich bei dem Druckentlastungsmechanismus (140) um eine in der ersten Wand (111) angeordnete Kerbnut (140b) handelt.

5. Batteriezelle (100) nach Anspruch 4, wobei die Kerbnut (140b) auf einer Außenoberfläche angeordnet ist, die zu der ersten Wand (111) gehört und die von dem Aufnahmeraum (112) zurück weist.

6. Batteriezelle (100) nach Anspruch 4, wobei entlang einer zu der ersten Wand (111) senkrechten Richtung eine entsprechende Abmessung der ersten Wand (111) an der Kerbnut (140b) 1/4 bis 3/4 einer Abmessung der ersten Wand (111) in anderen Bereichen beträgt.

7. Batteriezelle (100) nach einem der Ansprüche 1 bis 6, wobei das Gehäuse (110) ferner eine sich entlang der Längenrichtung erstreckende zweite Wand (113) umfasst, die zweite Wand (113) mit der ersten Wand (111) zusammenläuft, die erste Wand (111) zu der Breitenrichtung senkrecht ist, die zweite Wand (113) zu der Dickenrichtung senkrecht ist und ein Flächeninhalt der ersten Wand (111) geringer als ein Flächeninhalt der zweiten Wand (113) ist.

8. Batteriezelle (100) nach Anspruch 7, wobei die Elektrodenanordnung (120) eine Vielzahl von entlang der Dickenrichtung gestapelten Elektrodenplatten (121) umfasst und die Elektrodenplatten (121) zusammen mit der zweiten Wand (113) entlang der Dickenrichtung gestapelt sind.

9. Batterie (10), umfassend:
die Batteriezelle (100) nach einem der Ansprüche 1 bis 8, wobei eine Vielzahl der Batteriezellen (100) Seite an Seite entlang der Dickenrichtung angeordnet sind, sowohl die Längenrichtung als auch die Dickenrichtung zu einer horizontalen Richtung parallel sind und die Breitenrichtung zu einer vertikalen Richtung parallel ist.

10. Batterie (10) nach Anspruch 9, wobei sich die erste Wand (111) entlang der vertikalen Richtung an einem Boden der Batteriezellen (100) befindet.

11. Elektrische Vorrichtung, umfassend die Batterie (10) nach Anspruch 9 oder 10.

## Revendications

1. Cellule de batterie (100), comprenant :
un boîtier (110), une dimension du boîtier (110) le long d'une direction de longueur étant supérieure à une dimension du boîtier (110) le long d'une direction d'épaisseur et une dimension du boîtier (110) le long d'une direction de largeur, et le boîtier (110) comprenant une première tôle (111) s'étendant le long de la direction de longueur et un espace de logement (112) ouvert depuis au moins une extrémité ;
un ensemble électrode (120), disposé dans l'espace de logement (112) ;
un couvercle (130), conçu pour couvrir l'ouverture,
dans laquelle, un mécanisme de libération de pression (140) est disposé sur la première tôle (111), le mécanisme de libération de pression (140) est conçu pour être actionné afin de libérer une pression interne quand la pression ou la température internes du boîtier (110) atteint un seuil, et, dans la direction de longueur, une dimension d'extension du mécanisme de libération de pression (140) est supérieure ou égale à 1/4 d'une dimension d'extension de la première tôle (111) ; et
**caractérisée en ce que** la première tôle (111) comprend une première partie (111a) et une deuxième partie (111b) qui sont agencées côte à côte, la première partie (111a) étant fixée à la deuxième partie (111b) par soudage, une soudure (140a) étant formée au niveau d'une jonction entre la première partie (111a) et la deuxième partie (111b), et la soudure (140a) constituant le mécanisme de libération de pression (140).

2. Cellule de batterie (100) selon la revendication 1, dans laquelle le mécanisme de libération de pression (140) est situé dans une région centrale de la première tôle (111).

3. Cellule de batterie (100) selon la revendication 1, dans laquelle la soudure (140a) s'étend à travers la première tôle (111) le long de la direction de longueur.

4. Cellule de batterie (100) selon la revendication 1, dans laquelle le mécanisme de libération de pression (140) est une rainure d'encoche (140b) disposée sur la première tôle (111).

5. Cellule de batterie (100) selon la revendication 4, dans laquelle la rainure d'encoche (140b) est disposée sur une surface externe qui appartient à la première tôle (111) et qui est orientée à l'opposé de l'espace de logement (112).

6. Cellule de batterie (100) selon la revendication 4, dans laquelle, le long d'une direction perpendiculaire à la première tôle (111), une dimension correspondante de la première tôle (111) au niveau de la rainure d'encoche (140b) est de 1/4 à 3/4 d'une dimension de la première tôle (111) dans d'autres régions.

7. Cellule de batterie (100) selon l'une quelconque des revendications 1 à 6, dans laquelle le boîtier (110) comprend en outre une deuxième tôle (113) s'étendant le long de la direction de longueur, la deuxième tôle (113) intersecte la première tôle (111), la première tôle (111) est perpendiculaire à la direction de largeur, la deuxième tôle (113) est perpendiculaire à la direction d'épaisseur, et une aire de la première tôle (111) est inférieure à une aire de la deuxième tôle (113).

8. Cellule de batterie (100) selon la revendication 7, dans laquelle l'ensemble électrode (120) comprend une pluralité de plaques d'électrode (121) empilées le long de la direction d'épaisseur, et les plaques d'électrode (121) sont empilées ensemble avec la deuxième tôle (113) le long de la direction d'épaisseur.

9. Batterie (10), comprenant :
la cellule de batterie (100) selon l'une quelconque des revendications 1 à 8, dans laquelle une pluralité des cellules de batterie (100) sont agencées côte à côte le long de la direction d'épaisseur, la direction de longueur et la direction d'épaisseur étant toutes deux parallèles à une direction horizontale, et la direction de largeur étant parallèle à une direction verticale.

10. Batterie (10) selon la revendication 9, dans laquelle la première tôle (111) est située au niveau d'un fond des cellules de batterie (100) le long de la direction verticale.

11. Dispositif électrique, comprenant la batterie (10) selon la revendication 9 ou 10.
